# EUROPEAN PATENT SPECIFICATION

(11) **EP 3 262 118 B1**
(45) Date of publication and mention of the grant of the patent: **08.05.2019**
(21) Application number: 16708868.1
(22) Date of filing: 22.02.2016
(51) Int. Cl.: C08L 67/02, C08L 77/06, C08L 79/08

(54) **ELECTRICAL TRACKING RESISTANCE COMPOSITIONS, ARTICLES FORMED THEREFROM, AND METHODS OF MANUFACTURE THEREOF**
ZUSAMMENSETZUNGEN MIT WIDERSTAND GEGEN ELEKTRISCHE KRIECHWEGBILDUNG, DARAUS GEFORMTE ARTIKEL UND VERFAHREN ZUR HERSTELLUNG DAVON
COMPOSITIONS DE RÉSISTANCE AU CHEMINEMENT ÉLECTRIQUE, ARTICLES FORMÉS À PARTIR DE CELLES-CI, ET LEURS PROCÉDÉS DE FABRICATION

(30) Priority: 23.02.2015 US 201562119481 P
(43) Date of publication of application: 03.01.2018
(73) Proprietor: SABIC Global Technologies B.V., 4612 PX Bergen op Zoom (NL)
(72) Inventor: RAMALINGAM, Hariharan, Bangalore Karnataka 562125 (IN); MEDIRATTA, Gaurav, Bangalore Karnataka 562125 (IN)
(74) Representative: Office Freylinger
(86) International application number: PCT/US2016/018869
(87) International publication number: WO 2016/137861

(56) References cited:
- EP-A1- 0 414 748
- US-A1- 2004 232 598

## Description

### BACKGROUND

This disclosure is directed to polyetherimide compositions, and in particular to electrical tracking resistant polyetherimide compositions, articles formed therefrom, and their methods of manufacture.

Polyetherimides are known as outstanding high performance materials, having a high glass transition temperature (Tg), high modulus, and strength at elevated temperatures, as well as excellent chemical resistance. They are useful in the manufacture of articles and components for a wide range of applications. Because of their broad use, particularly in the electrical and electronic industries, it is desirable to provide polyetherimides with good electrical tracking resistance. Electrical tracking is the formation of conductive pathways on the surface of a polymer under certain conditions and at a certain voltage. Electrical tracking in a polymer can be a source of fire therefore resistance to electrical tracking is often an important safety requirement for a material used in certain electrical applications. A common method of reporting the electrical tracking resistance of a polymer is by its comparative tracking index rating (CTI). Currently known polyetherimides can have a CTI of 100 to 175 volts. However, some applications can require a material having a higher CTI.

EP0414748A1 discloses a polymeric composition that comprises: (i) an aromatic polyimide or an aromatic carboxylic ester polymer, (ii) a substantially wholly aliphatic polyamide, and (iii) a polyamide that contains both aromatic aliphatic moieties. It is found that the mechanical properties of blends of the aromatic polymers (i) and the polyamides (iii) can be significantly improved by the incorporation of a quantity of the aliphatic amides (ii), even though the miscibility of polymers, as observed by their glass transition temperatures may remain unchanged.

There accordingly remains a need in the art for polyetherimide compositions that have excellent electrical tracking resistance. It would be a further advantage if the compositions could be rendered electrical tracking resistant without a significant detrimental effect on one or more of material cost, processability, and mechanical properties.

### SUMMARY

The above-described and other deficiencies of the art are met by a composition comprising, based on the total weight of the composition, 40 to 80 wt% of a polyetherimide; 10 to 50 wt% of talc; and 1 to 15 wt% of a polymer additive comprising a polyphthalamide, a poly(siloxane-etherimide) copolymer, an aliphatic polyamide, or a combination comprising at least one of the foregoing; wherein the composition has a number of drops to tracking at 250 volts of greater than or equal to 50 drops determined according to ASTM D-3638-85.

In another embodiment, a method of manufacture comprises combining the above-described components to form a polyetherimide composition.

In yet another embodiment, an article comprises the above-described polyetherimide composition.

In still another embodiment, a method of manufacture of an article comprises molding, extruding, or shaping the above-described polyetherimide composition into an article.

The above described and other features are exemplified by the following drawings, detailed description, examples, and claims.

### DETAILED DESCRIPTION

The inventors have discovered that the addition of 10 wt% to 50 wt% of talc and 1 wt% to 15 wt% of a polymer additive such as a polyphthalamide, a poly(siloxane-etherimide) copolymer, aliphatic polyamide, or a combination comprising at least one of the foregoing to polyetherimides results in a significant improvement in the electrical tracking resistance of the polyetherimides. The polyetherimide compositions have a number of drops to tracking at 250 volts greater than or equal to 50 drops determined according to ASTM D-3638-85 and a tracking voltage greater than or equal to 270 volts determined according to ASTM D-3638-85. The results are surprising because other fillers such as barium titanate, mica, hydrotalcite, silica, aluminum silicate, acidic aluminum oxide, bentonite, halloysite clay, magnesium oxide, calcium hydroxyapatite, or calcium carbonate either do not improve or only slightly improve the electrical tracking resistance of polyetherimides.

The polyetherimide compositions can further have balanced mechanical properties. The compositions have a tensile strength greater than or equal to 65 MPa determined according to ASTM D638 and a tensile modulus greater than or equal to 10,000 GPa determined according to ASTM D638. Optionally, the compositions further have a melt flow rate greater than or equal to 5 g/10 min determined according to ASTM D1238 at 337 °C, using a 6.7 kilogram weight, and a heat deflection temperature of greater than or equal to 200°C measured on 3.2 millimeter injection molded bar at 1.82 MPa stress according to ASTM D648.

Polyetherimides comprise more than 1, for example 2 to 1000, or 5 to 500, or 10 to 100 structural units of formula (1) 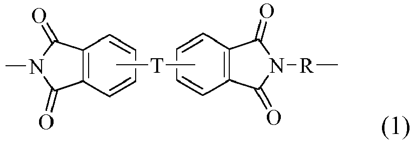 wherein each R is independently the same or different, and is a substituted or unsubstituted divalent organic group, such as a substituted or unsubstituted C₆₋₂₀ aromatic hydrocarbon group, a substituted or unsubstituted straight or branched chain C₂₋₂₀ alkylene group, a substituted or unsubstituted C₃₋₈ cycloalkylene group, in particular a halogenated derivative of any of the foregoing. In some embodiments R is divalent group of one or more of the following formulas (2) 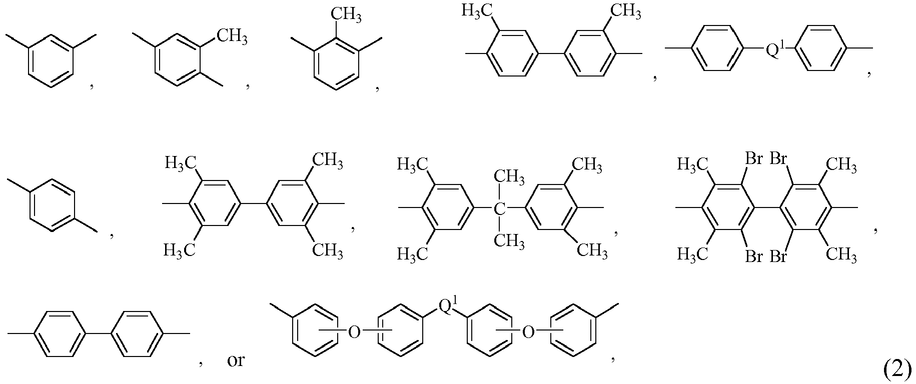 wherein Q¹ is -O-, -S-, -C(O)-, -SO₂-, -SO-, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some embodiments R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In some embodiments, at least 10 mole percent of the R groups contain sulfone groups, and in other embodiments no R groups contain sulfone groups.

Further in formula (1), T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Some groups Z include groups of formula (3) 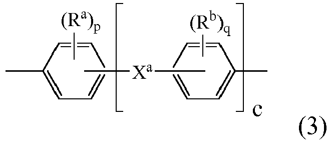 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (3a) 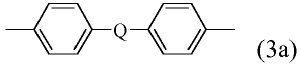 wherein Q is -O-, -S-, -C(O)-, -SO₂-, -SO-, or -C_{y}H_{2y}- wherein y is an integer from 1 to 5 or a halogenated derivative thereof (including a perfluoroalkylene group). In a specific embodiment Z is a derived from bisphenol A, such that Q in formula (3a) is 2,2-isopropylidene.

In an embodiment in formula (1), R is m-phenylene, p-phenylene, or a combination comprising at least one of the foregoing, and T is -O-Z-O- wherein Z is a divalent group of formula (3a). Alternatively, R is m-phenylene, p-phenylene, or a combination comprising at least one of the foregoing, and T is -O-Z-O wherein Z is a divalent group of formula (3a) and Q is 2,2-isopropylidene. Alternatively, the polyetherimide can be a copolymer comprising additional structural polyetherimide units of formula (1) wherein at least 50 mole percent (mol%) of the R groups are bis(3,4'-phenylene)sulfone, bis(3,3'-phenylene)sulfone, or a combination comprising at least one of the foregoing and the remaining R groups are p-phenylene, m-phenylene or a combination comprising at least one of the foregoing; and Z is 2,2-(4-phenylene)isopropylidene, i.e., a bisphenol A moiety.

In some embodiments, the polyetherimide is a copolymer that optionally comprises additional structural imide units that are not polyetherimide units, for example imide units of formula (4) 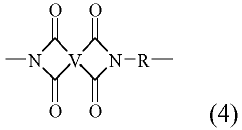 wherein R is as described in formula (1) and each V is the same or different, and is a substituted or unsubstituted C₆₋₂₀ aromatic hydrocarbon group, for example a tetravalent linker of the formulas 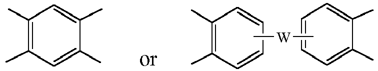 wherein W is a single bond, -S-, -C(O)-, -SO₂-, -SO-, or -C_{y}H_{2y}- wherein y is an integer from 1 to 5 or a halogenated derivative thereof (which includes perfluoroalkylene groups). These additional structural imide units preferably comprise less than 20 mol% of the total number of units, and more preferably can be present in amounts of 0 to 10 mol% of the total number of units, or 0 to 5 mol% of the total number of units, or 0 to 2 mole % of the total number of units. In some embodiments, no additional imide units are present in the polyetherimide.

The polyetherimide can be prepared by any of the methods known to those skilled in the art, including the reaction of an aromatic bis(ether anhydride) of formula (5) or a chemical equivalent thereof, with an organic diamine of formula (6) 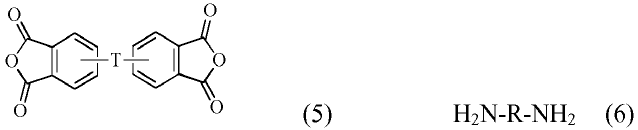 wherein T and R are defined as described above. Copolymers of the polyetherimides can be manufactured using a combination of an aromatic bis(ether anhydride) of formula (5) and an additional bis(anhydride) that is not a bis(ether anhydride), for example pyromellitic dianhydride or bis(3,4-dicarboxyphenyl) sulfone dianhydride.

Illustrative examples of aromatic bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different aromatic bis(ether anhydride)s can be used.

Examples of organic diamines include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. C₁₋₄ alkylated or poly(C₁₋₄)alkylated derivatives of any of the foregoing can be used, for example a polymethylated 1,6-hexanediamine. Combinations of these compounds can also be used. In some embodiments the organic diamine is m-phenylenediamine, p-phenylenediamine, 4,4'-diaminodiphenyl sulfone, 3,4'-diaminodiphenyl sulfone, 3,3'-diaminodiphenyl sulfone, or a combination comprising at least one of the foregoing.

The thermoplastic composition can also comprise a poly(siloxane-etherimide) copolymer comprising polyetherimide units of formula (1) and siloxane blocks of formula (7) 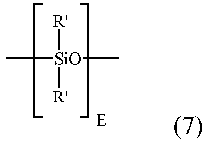 wherein E has an average value of 2 to 100, 2 to 31, 5 to 75, 5 to 60, 5 to 15, or 15 to 40, and each R' is independently a C₁₋₁₃ monovalent hydrocarbyl group. For example, each R' can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkyl group, C₇₋₁₃ arylalkoxy group, C₇₋₁₃ alkylaryl group, or C₇₋₁₃ alkylaryloxy group. The foregoing groups can be fully or partially halogenated with fluorine, chlorine, bromine, or iodine, or a combination comprising at least one of the foregoing. In an embodiment no bromine or chlorine is present, and in another embodiment no halogens are present. Combinations of the foregoing R' groups can be used in the same copolymer. In an embodiment, the polysiloxane blocks comprises R' groups that have minimal hydrocarbon content. In a specific embodiment, an R' group with a minimal hydrocarbon content is a methyl group.

The poly (siloxane-etherimide)s can be formed by polymerization of an aromatic bis(ether anhydride) of formula (5) and a diamine component comprising an organic diamine (6) as described above or mixture of diamines, and a polysiloxane diamine of formula (8) 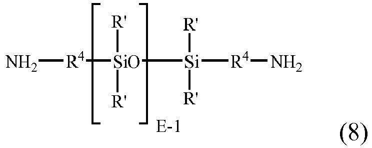 wherein R' and E are as described in formula (7), and R⁴ is each independently a C₂-C₂₀ hydrocarbon, in particular a C₂-C₂₀ arylene, alkylene, or arylenealkylene group. In an embodiment R⁴ is a C₂-C₂₀ alkylene group, specifically a C₂-C₁₀ alkylene group such as propylene, and E has an average value of 5 to 100, 5 to 75, 5 to 60, 5 to 15, or 15 to 40. Procedures for making the polysiloxane diamines of formula (8) are well known in the art.

In some poly(siloxane-etherimide)s the diamine component can contain 10 to 90 mole percent (mol %), or 20 to 50 mol%, or 25 to 40 mol% of polysiloxane diamine (8) and 10 to 90 mol%, or 50 to 80 mol%, or 60 to 75 mol% of diamine (6), for example as described in US Patent 4,404,350. The diamine components can be physically mixed prior to reaction with the bisanhydride(s), thus forming a substantially random copolymer. Alternatively, block or alternating copolymers can be formed by selective reaction of (6) and (8) with aromatic bis(ether anhydrides (5), to make polyimide blocks that are subsequently reacted together. Thus, the poly(siloxane-imide) copolymer can be a block, random, or graft copolymer. In an embodiment the copolymer is a block copolymer.

Examples of specific poly(siloxane-etherimide)s are described in US Pat. Nos. 4,404,350, 4,808,686 and 4,690,997. In an embodiment, the poly(siloxane-etherimide) has units of formula (9) 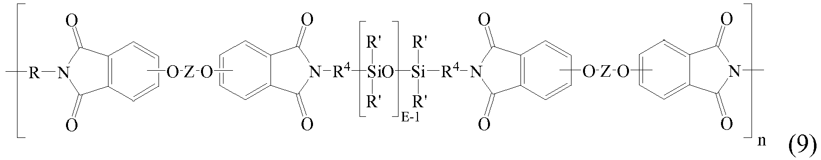 wherein R' and E of the siloxane are as in formula (7), the R and Z of the imide are as in formula (1), R⁴ is the same as R⁴ as in formula (8), and n is an integer from 5 to 100. In a specific embodiment, the R of the etherimide is a phenylene, Z is a residue of bisphenol A, R⁴ is n-propylene, E is 2 to 50, 5, to 30, or 10 to 40, n is 5 to 100, and each R' of the siloxane is methyl.

The relative amount of polysiloxane units and etherimide units in the poly(siloxane-etherimide) depends on the desired properties, and are selected using the guidelines provided herein. In particular, as mentioned above, the block or graft poly(siloxane-etherimide) copolymer is selected to have a certain average value of E, and is selected and used in amount effective to provide the desired wt% of polysiloxane units in the composition. In an embodiment the poly(siloxane-etherimide) comprises 10 to 50 wt%, 10 to 40 wt%, or 20 to 35 wt% polysiloxane units, based on the total weight of the poly(siloxane-etherimide).

The polyetherimides can have a melt index of 0.1 to 10 grams per minute (g/min), as measured by American Society for Testing Materials (ASTM) D1238 at 340 to 370°C, using a 6.7 kilogram (kg) weight. In some embodiments, the polyetherimidehas a weight average molecular weight (Mw) of 1,000 to 150,000 grams/mole (Dalton), as measured by gel permeation chromatography, using polystyrene standards. In some embodiments the polyetherimide has an Mw of 10,000 to 80,000 Daltons. Such polyetherimides typically have an intrinsic viscosity greater than 0.2 deciliters per gram (dl/g), or, more specifically, 0.35 to 0.7 dl/g as measured in m-cresol at 25°C.

The amount of polyetherimide used in the polyetherimide composition can vary widely, and is that amount effective to provide the desired mechanical properties and electrical tracking resistance. In some instances the polyetherimide is present in an amount from 40 wt% to 80 wt%, specifically 40 wt% to 70 wt%, and more specifically 50 wt% to 70 wt%, each based on the total weight of the composition.

The polyetherimide compositions further comprise a polymer additive, for example a polyphthalamide. Polyphthalamides comprise repeating units having formula (10) 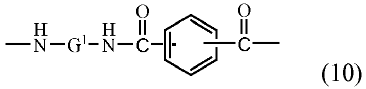 wherein each G¹ is independently a branched or unbranched C₄₋₈ alkyl. In some embodiments, each G¹ is a 1,6-hexyl group. Polyamides, in general characterized by the presence of an amide group (-C(O)NH-) which is the condensation product of a carboxylic acid and an amine. Polyphthalamides are the condensation product of terephthalic acid and an amine, isophthalic acid and an amine, or a combination of terephthalic acid, isophthalic acid, and an amine. When employing more than one diamine the ratio of the diamines can affect some of the physical properties of the resulting polymer such as the melt temperature. When employing more than one acid, the ratio of the acids can affect some of the physical properties of the resulting polymer as well. The ratio of diamine to dicarboxylic acid is typically equimolar although excesses of one or the other can be used to determine the end group functionality. In addition the reaction can further include monoamines and monocarboxylic acids which function as chain stoppers and determine, at least in part, the end group functionality. In some embodiments it is preferable to have an amine end group content of greater than or equal to about 30 milliequivalents per gram (meq/g), or, more specifically, greater than or equal to about 40 meq/g.

In some embodiments the polyphthalamide is a block copolymer or a random copolymer comprising the units of formula (10) and units of formula (11) 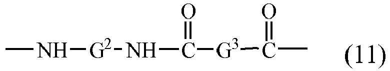 wherein each G² and G³ are independently a branched or unbranched C₄₋₁₂ alkyl group.

In some embodiments, the polymer additive is a nylon, i.e., an aliphatic polyamide. Aliphatic polyamides comprise units of formula (11). Aliphatic polyamides are generally derived from the polymerization of the corresponding C₄₋₁₂ organic lactams, or C₄₋₁₂ amino acids and C₄₋₁₂ carboxylic acids as is known in the art. Examples of useful polyamides include nylon 6, nylon 6,6, nylon 4,6, nylon 6, 12, nylon 10, or the like, or combinations including at least one of the foregoing polyamides.

Talc has been surprisingly found as a useful additive for improving electrical tracking resistance performance of polyetherimide, especially compared to mineral fillers such as barium titanate, mica, hydrotalcite, silica, aluminum silicate, acidic aluminum oxide, bentonite, halloysite clay, magnesium oxide, calcium hydroxyapatite, or calcium carbonate.

The amount of talc in the polyetherimide composition is in the range of 10 to 50 wt%, or 20 to 50 wt%, or in the range of 30 to 50 wt%, or 35 to 45 wt%, based on the total weight of the polyetherimide compositions.

The particle size of talc also affects the CTI performance of the polyetherimide compositions. In an embodiment, the titanium dioxide has a D95 of 2 micrometers to 6 micrometers. As used herein, D95 refer to the cut-particle diameter of the particulate where 95 wt% of the particles in the total distribution of the referenced sample have the noted particle diameter or smaller. For example, a D95 particle size of 3.5 micrometers means that 95 wt% of the particles in the sample have a diameter of 3.5 micrometers or less. In an embodiment, the particle size is determined by sedigraph analysis using for example a Micromeritics Sedigraph 5120 Particle Size Analysis System.

In an embodiment, the polyetherimide compositions comprise 40 wt% to 70 wt% of a polyetherimide, 30 wt% to 50 wt% of talc, and 1 to 15 wt% of a polymer additive selected from a polyphthalamide, a poly(siloxane-etherimide) copolymer, or a combination comprising at least one of the foregoing.

The polyetherimide compositions can include various additives ordinarily incorporated into polymer compositions of this type, with the proviso that the additives are selected so as to not significantly adversely affect the desired properties of the composition. Exemplary additives include catalysts, impact modifiers, fillers, antioxidants, thermal stabilizers, light stabilizers, ultraviolet light (UV) absorbing additives, quenchers, plasticizers, lubricants, mold release agents, antistatic agents, visual effect additives such as dyes, pigments, and light effect additives, flame retardants, anti-drip agents, and radiation stabilizers. Combinations of additives can be used, for example a combination of a heat stabilizer, a mold release agent, and optionally an ultraviolet light stabilizer. In an embodiment the polyetherimide compositions further comprise an additive selected from a processing aid, a heat stabilizer, an ultraviolet light absorber, a colorant, a flame retardant, or a combination comprising at least one of the foregoing. In general, the additives are used in the amounts generally known to be effective. The foregoing additives (except any fillers) are generally present in an amount of 0.0001 to 20 wt% or 0.005 to 20 wt%, specifically 0.01 to 10 wt%, based on the total weight of the composition. Alternatively, in some embodiments, the compositions do not contain appreciable amounts of additives, and in some embodiments, there are no detectable amounts of additives, i.e., additives are substantially absent or absent from the compositions. Accordingly, the foregoing additives (except any fillers) can be present in an amount of 0.0001 wt% to 20 wt%, 0.0001 wt% to 15 wt%, 0.01 wt% to 20 wt% or 0.01 wt% to 20 wt%, based on the total weight of the composition. In another embodiment, no appreciable amount of any additive other than a heat stabilizer, a mold release agent, and optionally an ultraviolet light stabilizer is present in the compositions. In still another embodiment, no detectable amount of any additive other than a heat stabilizer, a mold release agent, and optionally an ultraviolet light stabilizer is present in the compositions.

Suitable antioxidants can be compounds such as phosphites, phosphonites and hindered phenols or a combination comprising at least one of the foregoing antioxidants. Phosphorus-containing stabilizers including triaryl phosphites and aryl phosphonates are useful additives. Difunctional phosphorus containing compounds can also be unseeded. Preferred stabilizers can have a molecular weight greater than 300. Some exemplary compounds are tris-di-tert-butylphenyl phosphite available from Ciba Chemical Co. as IRGAFOS 168 and bis (2,4-dicumylphenyl) pentaerythritol diphosphite available commercially from Dover Chemical Co. as DOVERPHOS S-9228.

Examples of phosphites and phosphonites include: triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxy pentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol tri-phosphite, tetrakis(2,4-di-tert-butyl-phenyl) 4,4'-biphenylene diphosphonite, bis(2,4-di-tert-butyl-6-methylphenyl) methyl phosphite, bis(2,4-di-tert-butyl-6-methylphenyl) ethyl phosphite, 2,2',2"-nitrilo[triethyl tris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite and 5-butyl-5-ethyl-2-(2,4,6-tri-tert-butylphenoxy)-1,3,2-dioxaphosphirane.

Combinations comprising more than one organophosphorous compound are contemplated. When used in combination the organo phosphorous compounds can be of the same type or different types. For example, a combination can comprise two phosphite or a combination can comprise a phosphite and a phosphonite. In some embodiments, phosphorus-containing stabilizers with a molecular weight greater than 300 are useful. Phosphorus-containing stabilizers, for example an aryl phosphite are usually present in the composition in an amount from 0.005 to 3 wt%, specifically 0.01 to 1.0 wt%, based on total weight of the composition.

Hindered phenols can also be used as antioxidants, for example alkylated monophenols, and alkylated bisphenols or poly phenols. Exemplary alkylated monophenols include 2,6-di-tert-butyl-4-methylphenol; 2-tert-butyl-4,6-dimethylphenol; 2,6-di-tert-butyl-4-ethylphenol; 2,6-di-tert-butyl-4-n-butylphenol; 2,6-di-tert-butyl-4-isobutylphenol; 2,6-dicyclopentyl-4-methylphenol; 2-(alpha-methylcyclohexyl)-4,6-dimethylphenol; 2,6-dioctadecyl-4-methylphenol; 2,4,6-tricyclohexylphenol; 2,6-di-tert-butyl-4-methoxymethylphenol; nonyl phenols which are linear or branched in the side chains, for example, 2,6-di-nonyl-4-methylphenol; 2,4-dimethyl-6-(1'-methylundec-1'-yl)phenol; 2,4-dimethyl-6-(1'-methylheptadec-1'-yl)phenol; 2,4-dimethyl-6-(1'-methyltridec-1'-yl)phenol or a combination comprising at least one of the foregoing phenols. Exemplary alkylidene bisphenols include 2,2'-methylenebis(6-tert-butyl-4-methylphenol), 2,2'-methylenebis(6-tert-butyl-4-ethylphenol), 2,2'-methylenebis[4-methyl-6-(alpha-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(alpha-methylbenzyl)-4-nonylphenol], 2,2'-methylenebis[6-(alpha, alpha-dimethylbenzyl)-4-nonylphenol], 4,4'-methylenebis-(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane , ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane, or a combination comprising at least one of the foregoing.

The hindered phenol compound can have a molecular weight of greater than 300 g/mole. The high molecular weight can help retain the hindered phenol moiety in the polymer melt at high processing temperatures, for example greater than 300°C. Hindered phenol stabilizers, are usually present in the composition in an amount from 0.005 to 2 wt%, specifically 0.01 to 1.0 wt%, based on total weight of the composition.

Examples of mold release agents include both aliphatic and aromatic carboxylic acids and their alkyl esters, for example, stearic acid, behenic acid, pentaerythritol tetrastearate, glycerin tristearate, and ethylene glycol distearate. Polyolefins such as high-density polyethylene, linear low-density polyethylene, low-density polyethylene and similar polyolefin homopolymers and copolymers can also be used a mold release agents. Mold release agents are typically present in the composition at 0.05 to 10 wt%, based on total weight of the composition, specifically 0.1 to 5 wt%. Preferred mold release agents will have high molecular weight, typically greater than 300, to prevent loss of the release agent from the molten polymer mixture during melt processing.

In particular, an optional polyolefin can be added to modify the chemical resistance characteristics and mold release characteristics of the composition. Homopolymers such as polyethylene, polypropylene, polybutene can be used either separately or in combination. Polyethylene can be added as high-density polyethylene (HDPE), low-density polyethylene (LDPE), or branched polyethylene. Polyolefins can also be used in copolymeric form with compounds containing carbonic acid groups such as maleic acid or citric acid or their anhydrides, acid compounds containing acrylic acid groups such as acrylic acid ester, and the like, as well as combinations comprising at least one of the foregoing. When present, the polyolefin, in particular HDPET, is used in an amount from more than 0 to 10 wt%, specifically 0.1 to 8 wt%, more specifically from 0.5 to 5 wt%, all based on the total weight of the composition.

In some embodiments, the polyetherimide compositions can further include at least one additional polymer. Examples of such additional polymers include and are not limited to PPSU (polyphenylene sulfone), polyetherimides, PSU (polysulfone), PPET (polyphenylene ether), PFA (perfluoroalkoxy alkane), MFA (co-polymer of TFE tetrafluoroethylene and PFVE perfluorinated vinyl ether), FEP (fluorinated ethylene propylene polymers), PPS (poly(phenylene sulfide), PTFE (polytetrafluoroethylene), PA (polyamide), PBI (polybenzimidizole) and PAI (poly(amide-imide)), poly(ether sulfone), poly(aryl sulfone), polyphenylenes, polybenzoxazoles, polybenzthiazoles, as well as blends and co-polymers thereof. When present, the polymer is used in an amount from more than 0 to 20 wt%, specifically 0.1 to 15 wt%, more specifically from 0.5 to 10 wt%, all based on the total weight of the composition. In an embodiment, no polymer other than the polyetherimide as described herein is present in the composition.

Colorants such as pigment and/or dye additives can also optionally be present. Useful pigments can include, for example, inorganic pigments such as metal oxides and mixed metal oxides such as zinc oxide, titanium dioxide, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments. Pigments are generally used in amount from 0 to 10 wt%, specifically 0 to 5 wt%, based on the total weight of the composition. In some instances, where improved impact is desired pigments such as titanium dioxide will have a mean particle size of less than 5 micrometers.

In some instances it is desired to have polyetherimide compositions that are essentially free of bromine and chlorine. "Essentially free" of bromine and chlorine means that the composition has less than 3 wt% of bromine and chlorine, and in other embodiments less than 1 wt% bromine and chlorine by weight of the composition. In other embodiments, the composition is halogen free. "Halogen free" is defined as having a halogen content (total amount of fluorine, bromine, chlorine, and iodine) of less than 1000 parts by weight of halogen per million parts by weight of the total composition (ppm). The amount of halogen can be determined by ordinary chemical analysis such as atomic absorption.

The polyetherimide compositions can be prepared by blending the ingredients under conditions for the formation of an intimate blend. Such conditions often include melt mixing in single or twin screw type extruders, mixing bowl, or similar mixing devices that can apply a shear to the components. Twin-screw extruders are often preferred due to their more intensive mixing capability and self-wiping capability, over single screw extruders. It is often advantageous to apply a vacuum to the blend through at least one vent port in the extruder to remove volatile impurities in the composition. Often it is advantageous to dry the PET and polyimide polymers prior to melting. The melt processing is often done at 290 to 340°C to avoid excessive polymer degradation while still allowing sufficient melting to get an intimate polymer mixture free of any unbelted components. The polymer blend can also be melt filtered using a 40 to 100 micrometer candle or screen filter to remove undesirable black specks or other heterogeneous contaminants.

In an exemplary process, the various components are placed into an extrusion compounder to produce a continuous strand that is cooled and then chopped into pellets. In another procedure, the components are mixed by dry blending, and then fluxed on a mill and comminuted, or extruded and chopped. The composition and any optional components can also be mixed and directly molded, e.g., by injection or transfer molding techniques. Preferably, all of the components are freed from as much water as possible. In addition, compounding is carried out to ensure that the residence time in the machine is short; the temperature is carefully controlled; the friction heat is utilized; and an intimate blend between the components is obtained. The polyetherimide compositions can then be molded in any equipment conventionally used for polyetherimide compositions, such as a Newbury or van Dorn type injection-molding machine with conventional cylinder temperatures, at 250°C to 320°C, and conventional mold temperatures at 55°C to 120°C.

As discussed above, the polyetherimide compositions are formulated to have excellent electrical tracking resistance. In an embodiment, the compositions have number of drops to tracking at 250 volts greater than or equal to 50 drops, greater than or equal to 60 drops, greater than or equal to 70 drops, greater than or equal to 80 drops, greater than or equal to 90 drops, or greater than or equal to 100 drops, determined according to ASTM D-3638-85.

The polyetherimide compositions can have a tracking voltage greater than or equal to 270 volts, greater than or equal to 280 volts, greater than or equal to 290 volts, or greater than or equal to 300 volts determined according to ASTM D-3638-85.

The polyetherimide compositions can further have a tensile strength of greater than or equal to 65 MPa (Mega Pascal), greater than or equal to 70 MPa, greater than or equal to 75 MPa, or greater than or equal to 80 MPa determined according to ASTM D638.

The polyetherimide compositions can have a combination of glow wire ignition temperature of greater than or equal to 960°C and glow wire flammability index of greater than or equal to 850°C determined according to IEC 60695-2-13.

The polyetherimide compositions can further have a tensile modulus of greater than or equal to 11,000 GPa (Giga Pascal), greater than or equal to 12,000 GPa determined according to ASTM D638.

The polyetherimide compositions can further have a heat deflection temperature (HDT) of 190 to 250 °C, more specifically 190 to 230 °C, 200°C to 220°C or 200°C to 210°C measured on 3.2 millimeter injection molded bar at 1.82 MPa stress according to ASTM D648.

The compositions further have a melt flow rate greater than or equal to 5 g/10 min or between 5 g/10 min and 15 g/10 min determined according to ASTM D1238 at 337 °C, using a 6.7 kilogram weight.

Shaped, formed, or molded articles comprising the polyetherimide compositions are also provided. The polyetherimide compositions can be molded into useful shaped articles by a variety of means such as injection molding, extrusion, rotational molding, blow molding, and thermoforming. Thus the polyetherimide compositions can be used to form a foamed article, a molded article, a thermoformed article, an extruded film, an extruded sheet, one or more layers of a multi-layer article (e.g. a cap-layer), a substrate for a coated article, or a substrate for a metallized article.

In another embodiment, at least one of the following articles are contained in or are derived from the compositions encompassed by this disclosure: a solar apparatus, an electrical junction box, an electrical connector, an electrical vehicle charger, an outdoor electrical enclosure, a smart meter enclosure, a smart grid power node, PV (photovoltaic) frame, and miniature circuit breaker (MCB) applications.

The polyetherimide compositions having improved CTI performance and balanced mechanical properties are further illustrated by the following non-limiting examples. All parts and percentages are by weight unless explicitly stated otherwise. All temperatures are degrees Celsius unless explicitly stated otherwise.

### EXAMPLES

The materials used in the Examples are described in Table 1.

**Table 1.**

| Component | Chemical Description | Source, Vendor |
|---|---|---|
| PEI | Polyetherimide (ULTEM*) | SABIC |
| PEI-Si | Siloxane polyetherimide copolymer (STM* 1700) | SABIC |
| PPA | Polyphthalamides (ZYTEL* HTN 501) | DuPont |
| Nylon 6,6 | Poly[imino(1,6-dioxohexamethylene) imnohexamethylene] (ZYTEL* PA66) | DuPont |
| Jetfine Talc 1A | Talc having a D95 of 2.9 micrometers | IMERYS |
| Jetfine Talc 3CA | Talc having a D95 of 3.5 micrometers | IMERYS |
| Jetfine Talc 8CF | Talc having a D95 of 5.7 micrometers | IMERYS |
| Talc powder | Talc having a D95 of less than 10 micrometers | Aldrich |
| Talc - HM4 | Talc having a D95 of 30 micrometers | Imifabi |
| Talc - ultrafine | Talc having a D95 of 4.5 micrometers | Imifabi |
| Talc-HTPl | Talc having a D95 of 8 micrometers | Imifabi |
| Barium Titanate (IV) | 3-12 mm & less than 3 micrometers | Aldrich |
| Calcium hydroxyapatite | Ca₁₀(PO₄)₆(OH)₂ | Aldrich |
| Calcium carbonate | 10-30 micrometer | Aldrich |
| Mica | Less than 5 micrometers | Sanbaomica |
| Halloysite clay | Less than 5 micrometers | Applied Minerals Inc. |
| Hydrotalcite | Mg₆Al₂(CO₃)(OH)₁₆.4H₂O | Aldrich |
| Magnesium oxide | 325 mesh size | Aldrich |
| Zirconium silicate | 325 mesh size | Aldrich |
| Silica | 200 nm size | Aldrich |
| Aluminum silicate | Hydrated | Nano Products Corp. |
| Bentonite | Aluminum Phyllosilicate | E-Merck |

### Blending, Extrusion, and Molding Conditions

Compositions were formed by melt mixing the polyetherimide, talc, and PPA or nylon 6,6, or PEI-Si. Extrusion was carried out in a 2.5-inch twin screw, vacuum vented extruder. The extruder was set at about 300-350°C. The blends were run at approximately 250 rotations per minute (rpm) under vacuum. Compositions were made in a one pass method. The extrudate was cooled, pelletized, and dried at 150°C. Test samples were injection molded at a set temperature of 340-350°C and mold temperature of 150-160°C using a 30 second cycle time. Testing Procedures

All molded samples were conditioned for at least 48 hours at 50% relative humidity prior to testing. Properties were measured using ASTM test methods. Unless specified to the contrary herein, all test standards are the most recent standard in effect at the time of filing this application.

Unnotched Izod impact values were measured at room temperature on 3.2 millimeter thick bars as per ASTM D256. Samples were tested at room temperature. Results are in Joules per meter (J/m).

Tensile properties were measured on 3.2 millimeter type I bars as per ASTM method D638 at 23 °C with a crosshead speed of 5 millimeters/minute. Percent elongation (% Elongation) is reported at break (B). Tensile modulus, tensile strength at yield, and tensile strength at break results are reported in MPa (Mega Pascal) or GPa (Giga Pascal).

Melt flow rates (MFR) were measured in accordance with ASTM D1238 at 337 °C, using a 6.7 kilogram (kg) weight. MFR is reported in grams per 10 minutes (g/10 min).

Heat Deflection Temperature (HDT) was measured on 3.2 millimeter injection molded bar at 1.82 MPa stress according to ASTM D648. HDT is reported in degree Celsius (C).

Electrical tracking resistance tests were performed on a 3mm square plaque (6 x 6 cm) in accordance with the ASTM D-3638. The test can be started at any given voltage. At each voltage 5 specimens are tested and the average number of drops is recorded. The test is performed at (at least) 4 different voltages, where there should be at least two data points with an average number of drops higher than 50 and two data points with an average number of drops lower than 50. A voltage extrapolation to 50 drops is made, and based on this voltage (V_{ASTM}) a PLC class is assigned. This assignment is provided according to the table below. The CTI rating of a polymer indicates how resistant the polymeric material is to electrical tracking at certain voltages. CTI ratings range from CTI-0 to CTI-5 with a CTI-1 rating indicating that a polymer is more resistant to electrical tracking than a polymer with a lower CTI rating (for example CTI-3).

| VASTM | PLC |
|---|---|
| <100 | 5 |
| 100-174 | 4 |
| 175-249 | 3 |
| 250-399 | 2 |
| 400-599 | 1 |
| ≥600 | 0 |

A screening method was employed to predict the CTI-2 performance of polyetherimide compositions. The method employed the ASTM D-3638 method but testing was conducted at only one voltage, 250 V. The number of drops until failure was recorded and no more than 100 drops were applied. A prediction of a CTI-2 rating for a sample was based on reaching at least 50 drops of the electrolyte solution before failure at 250 V. A prediction of not receiving a CTI rating was based on failure before reaching 50 drops of the electrolyte solution at 250 V. The screening method for predicting CTI-2 rating is identified throughout the disclosure as the CTI test.

Glow wire ignition temperature (GWIT) refers to the temperature which is 25°C higher than the maximum temperature which does not cause ignition of a test specimen at a given thickness during three subsequent tests. Glow wire flammability index (GWFT) refers to the maximum temperature in which all flaming and glowing cease within 30 seconds after removal of the glow-wire during three subsequent tests. GWIT and GWFT were tested in accordance with IEC 60695-2-13.

### Examples 1-6

Examples 1-6 demonstrate the effect of the addition of polymer additives and talc to polyetherimide on mechanical and CTI properties. Formulations and results are shown in Table 2.

**Table 2**

| Component | 1* | 2 | 3 | 4 | 5 | 6 |
|---|---|---|---|---|---|---|
| PEI | 100 | 55 | 50 | 55 | 50 | 55 |
| Jet fine Talc 3CA | | 40 | 40 | 40 | 40 | 40 |
| PPA | | 5 | 10 | | | |
| PEI-Si | | | | 5 | 10 | |
| Nylon 6,6 | | | | | | 5 |
| Property | | | | | | |
| Tensile strength (MPa) | 100 | 78 | 91 | 80 | 67 | 54 |
| Tensile modulus (GPa) | 3580 | 11106 | 11028 | 11582 | 11006 | 10036 |
| % Elongation | 7 | 1 | 1 | 1 | 1 | 1 |
| Flexural strength (GPa) | 165 | 127 | 148 | 129 | 134 | 101 |
| Flexural Modulus (MPa) | 3510 | 11431 | 11280 | 10832 | 10339 | 10903 |
| Unnotched Impact (J/m) | 1335 | 139 | 241 | 185 | 143 | 112 |
| MFR 337 °C, 6.7 Kg, 5 min (g/10 min) | 17.8 | 5 | 10 | 5 | 6 | 14 |
| HDT (1.82 MPa) | 198 | 205 | 202 | 209 | 207 | 207 |
| No. of drops for tracking@ 250 Volts | 10 | 74 | 100 | 100 | 100 | 100 |
| Tracking Voltage (Volts) | 162 | 357 | 360 | 275 | 300 | 270 |
| PLC Rating | 4 | 2 | 2 | 2 | 2 | 2 |

| | | | | | | |
|---|---|---|---|---|---|---|
| * Comparative Example | | | | | | |

Comparative example 1 shows that a composition containing 100% PEI has a number of drops to tracking at 250 volts of 10 drops, and a tracking voltage of 162 volts. By blending 5 to 10 wt% of PPA or PEI-Si with polyetherimide and talc, compositions having a tensile strength greater than or equal to 65 MPa, tensile modulus greater than or equal to 11,000 GPa, melt flow rate greater than or equal to 5 g/10 min, HDT greater than or equal to 200°C, number of drops to tracking at 250 volts greater than or equal to 50 drops, and tracking voltage greater than or equal to 270 volts are obtained. Blending 5 wt% of nylon 6,6 with polyetherimide and talc improves the number of drops to tracking at 250 volts to 100 and the tracking voltage to 270.

### Examples 7-12

Examples 7-12 demonstrate the effect of the addition of various amounts of talc and polymer additive to polyetherimide on CTI properties. Formulations and results are shown in Table 3.

**Table 3**

| Component | 7* | 8 | 9 | 10 | 11 | 12 |
|---|---|---|---|---|---|---|
| PEI | 100 | 65 | 60 | 55 | 55 | 55 |
| Jet fine talc 3CA | | 35 | 40 | 40 | 40 | 40 |
| PPA | | | | 5 | | |
| PEI-Si | | | | | 5 | |
| Nylon 6,6 | | | | | | 5 |
| Property | | | | | | |
| T_{GW} | 960 | 960 | 960 | 960 | 960 | 960 |
| Tᵢ | 0 | 19 | 20 | 0 | 26 | 0 |
| T_{E} | 30 | 11 | 14 | 19 | 4 | 12 |
| T_{R} | # | # | # | # | # | # |
| X₁ | 1,4 | 1,4 | 1,4 | 1,4 | 1,4 | 1,4 |
| GWFI @ 3mm (°C) | 960 | 960 | 960 | 960 | 960 | 960 |
| | | | | | | |
| T_{GW} | 800 | 850 | 850 | 850 | 875 | 775 |
| Tᵢ | * | * | * | 27 | 28 | * |
| T_{E} | * | * | * | 3 | 2 | * |
| T_{R} | # | # | # | # | # | # |
| X₁ | 1,4 | 1,4 | 1,4 | 1,4 | 1,4 | 1,4 |
| | | | | | | |
| T_{GW} | 825 | 875 | 875 | 875 | 900 | 800 |
| Tᵢ | 18 | 17 | 23 | 5 | 6 | 3 |
| T_{E} | 12 | 13 | 7 | 25 | 6 | 7 |
| T_{R} | # | # | # | # | # | # |
| X₁ | 1,4 | 1,4 | 1,4 | 1,4 | 1,4 | 1,4 |
| GWIT @ 3mm (°C) | 825 | 875 | 875 | 875 | 900 | 800 |

| | | | | | | |
|---|---|---|---|---|---|---|
| *Comparative Example T_{GW} = Glow Wire Tip Temperature T_{I} = Time to Ignite T_{E} = Total Flaming and Glowing time (for GWIT) T_{R} = Total Flaming and Glowing Time After Glow Wire Tip Removal (for GWFI) Observations (X₁) (#) No ignition after 30 second application; (*) No flame at time of application and after 30 second application; (1) Specimen did not drip; (2) Specimen dripped particles which did not ignite tissue paper; (3) Specimen dripped particles which ignited tissue paper; (4) Tip penetrated sample; Ignition: flame that persists for longer than 5 s. | | | | | | |

These examples demonstrate that by adding talc together with polymer additives such as PPA, PEI-Si, and nylon 6,6 to polyetherimide, the obtained compositions are capable of achieving a combination of GWFI greater than or equal to 960°C and GWIT greater than or equal to 850°C, which is higher than that of the neat polyetherimide. Examples 13-17

Examples 13-17 demonstrate the effect of the addition of polymer additives and talc having a D95 of 2.9 micrometers to polyetherimide on mechanical and CTI properties. Formulations and results are shown in Table 4.

**Table 4**

| Component | 13* | 14 | 15 | 16 | 17 |
|---|---|---|---|---|---|
| PEI | 100 | 55 | 50 | 55 | 50 |
| Jet fine talc 1A | | 40 | 40 | 40 | 40 |
| PPA | | 5 | 10 | | |
| PEI-Si | | | | 5 | |
| Nylone 6,6 | | | | | 5 |
| Property | | | | | |
| Tensile strength (MPa) | 100 | 72 | 66 | 70 | 45 |
| Tensile modulus (GPa) | 3580 | 10292 | 10626 | 10613 | 10130 |
| % Elongation | 7 | 1 | 1 | 1 | 1 |
| Flexural strength (GPa) | 165 | 119 | 124 | 103 | 69 |
| Flexural Modulus (MPa) | 3510 | 9890 | 10228 | 9687 | 9076 |
| Unnotched Impact (J/m) | 1335 | 177 | 184 | 200 | 65 |
| MFR 337 °C, 6.7 Kg, 5 min (g/10 min) | 17.8 | 8 | 12 | 5 | 103 |
| HDT (1.82 MPa) | 198 | 205 | 201 | 209 | 200 |
| No. of drops for tracking@ 250 Volts | 10 | 100 | 100 | 100 | 100 |
| Tracking Voltage (Volts) | 162 | 293 | 324 | 307 | 301 |
| PLC Rating | 4 | 2 | 2 | 2 | 2 |

| | | | | | |
|---|---|---|---|---|---|
| * Comparative Example | | | | | |

Comparative example 1 shows that a composition containing 100% PEI has a number of drops to tracking at 250 volts of 10 drops, and a tracking voltage of 162 volts. By blending 5 to 10 wt% of PPA or PEI-Si with polyetherimide and talc having a D95 of 2.9 micrometers, compositions having a tensile strength greater than or equal to 65 MPa, tensile modulus greater than or equal to 10,000 GPa, HDT greater than or equal to 200°C, number of drops to tracking at 250 volts greater than or equal to 50 drops, and tracking voltage greater than or equal to 270 volts can be provided. Example 17 shows that blending 5 wt% of nylon 6,6 with polyetherimide and talc improves the number of drops to tracking at 250 volts to 100 drops and the tracking voltage to 301 volts.

### Examples 18-22

Examples 18-22 demonstrate the effect of the addition of talc having a D95 of 5.7 micrometers to polyetherimide on mechanical and CTI properties. Formulations and results are shown in Table 5.

**Table 5**

| Component | 18* | 19 | 20 | 21 | 22 |
|---|---|---|---|---|---|
| PEI | 100 | 55 | 50 | 55 | 50 |
| Jet fine Talc 8CF | - | 40 | 40 | 40 | 40 |
| PPA | | 5 | 10 | | |
| PEI-Si | | | | 5 | |
| Nylon 6,6 | | | | | 5 |
| Property | | | | | |
| Tensile strength (MPa) | 100 | 85 | 84 | 74 | 75 |
| Tensile modulus (GPa) | 3580 | 11474 | 11403 | 11290 | 11210 |
| % Elongation | 7 | 1 | 1 | 1 | 1 |
| Flexural strength (GPa) | 165 | 137 | 124 | 115 | 102 |
| Flexural Modulus (MPa) | 3510 | 10909 | 11019 | 10197 | 10727 |
| Unnotched Impact (J/m) | 1335 | 193 | 172 | 170 | 144 |
| MFR 337 °C, 6.7 Kg, 5 min (g/10 min) | 17.8 | 8 | 12 | 7 | 49 |
| HDT (1.82 MPa) | 198 | 205 | 200 | 207 | 198 |
| No. of drops for tracking@ 250 Volts | 10 | 100 | 100 | 100 | 100 |
| Tracking Voltage (Volts) | 162 | 276 | 323 | 308 | 309 |
| PLC Rating | 4 | 2 | 2 | 2 | 2 |

| | | | | | |
|---|---|---|---|---|---|
| * Comparative Example | | | | | |

Comparative example 1 shows that a composition containing 100% PEI has a number of drops to tracking at 250 volts of 10 drops, and tracking voltage of 162 volts. By blending 5 to 10 wt% of PPA or PEI-Si with polyetherimide and talc having a D95 of 5.7 micrometers, compositions having a combination of a tensile strength greater than or equal to 70 MPa, tensile modulus greater than or equal to 11,000 GPa, HDT greater than or equal to 200°C, number of drops to tracking at 250 volts greater than or equal to 50 drops, and tracking voltage is greater than or equal to 275 volts can be provided. Comparative example 22 shows that blending 5 wt% of nylon 6,6 with polyetherimide and talc slightly decreases the HDT of the polyetherimide composition

### Examples 23-27

Examples 23-27 demonstrate the effect of the addition of various fillers to polyetherimide on tensile strength, tensile modulus, and CTI properties. Formulations and results are shown in Table 6.

**Table 6**

| Component | 23* | 24* | 25* | 26* | 27* |
|---|---|---|---|---|---|
| PEI | 60 | 60 | 60 | 60 | 60 |
| Mica | 40 | | | | |
| Hydrotalcite | | 40 | | | |
| Zirconium silicates | | | 40 | | |
| Silica | | | | 40 | |
| Aluminum silicate | | | | | 40 |
| Property | | | | | |
| Tensile strength (MPa) | 98 | 43 | 93 | 43 | 25 |
| Tensile modulus (GPa) | 10302 | 4564 | 5357 | 5681 | 5902 |
| % Elongation | 1 | 1 | 4 | 1 | 1 |
| Flexural strength (GPa) | 220 | 85 | 153 | 75 | 77 |
| Flexural Modulus (MPa) | 10810 | 4944 | 5432 | 5790 | 6321 |
| MFR 337 °C, 6.7 Kg, 5 min (g/10 min) | 11 | 21 | 9 | 33 | 46 |
| Unnotched Impact (J/m) | 153 | 163 | 460 | 184 | 65 |
| HDT (1.82 MPa) | 199 | 179 | 200 | 177 | 170 |
| No. of drops for tracking@ 250 Volts | 10 | 6 | 5 | 10 | 5 |

| | | | | | |
|---|---|---|---|---|---|
| * Comparative Example | | | | | |

Comparative examples 23-27 show that formulations containing 60 wt% of polyetherimide and 40 wt% of mica, or 40 wt% of hydrotalcite, or 40 wt% of zirconium silicates, or 40 wt% of silica, or 40 wt% of aluminum silicate have poor CTI performance with number of drops to tracking at 250 volts being 10, 6, 5, 10, and 5 respectively. The number of drops to tracking at 250 volts for polyetherimide is 5 drops. Accordingly, the addition of 40 wt% of aluminum silicate or 40 wt% of zirconium silicates does not improve the CTI performance of polyetherimide at all. The addition of 40 wt% of mica, 40 wt% of hydrotalcite, or 40 wt% of silica only slightly improves the CTI performance of polyetherimide with the number of drops to tracking at 250 volts still failing the 50 drops test.

### Examples 28-35

Examples 28-35 demonstrate the effect of the addition of various fillers to polyetherimide. Formulations and results are shown in Table 7.

**Table 7**

| Component | 28* | 29* | 30* | 31* | 32* | 33* | 34* | 35* |
|---|---|---|---|---|---|---|---|---|
| PEI | 60 | 60 | 60 | 60 | 60 | 60 | 60 | 60 |
| Barium Titanate (3-12 micrometers) | 40 | | | | | | | |
| Barium Titanate (< 3 micrometers) | | 40 | | | | | | |
| Aluminum oxide (Acidic) | | | 40 | | | | | |
| Bentonite | | | | 40 | | | | |
| Halloysite clay | | | | | 40 | | | |
| Magnesium Oxide | | | | | | 40 | | |
| Calcium Hydroxyapatite | | | | | | | 40 | |
| Calcium carbonate | | | | | | | | 40 |
| Property | | | | | | | | |
| Tensile strength (MPa) | 13 | 86 | 68 | 35 | 54 | 40 | 100 | 84 |
| Tensile modulus (GPa) | 2209 | 4549 | 4879 | 4399 | 5756 | 4735 | 4140 | 5057 |
| % Elongation | 1 | 3 | 1 | 1 | 1 | 1 | 4 | 2 |
| Flexural strength (GPa) | 44 | 181 | 105 | 59 | 61 | 87 | 120 | 121 |
| Flexural Modulus (MPa) | 2660 | 4879 | 5369 | 4814 | 6122 | 4826 | 4222 | 5502 |
| MFR 337 °C, 6.7 Kg, 5 min (g/10 min) | 17 | 12 | 14 | 35 | 39 | 14 | 8 | 5 |
| Unnotched Impact (J/m) | 104 | 460 | 178 | 57 | 168 | 129 | 231 | 377 |
| HDT (1.82 MPa) | 181 | 194 | 190 | 187 | 181 | 190 | 184 | 192 |
| No. of drops for tracking at 250 volts | 19 | 9 | 18 | 3 | 9 | 5 | 9 | 19 |

| | | | | | | | | |
|---|---|---|---|---|---|---|---|---|
| *Comparative Example | | | | | | | | |

It was expected that fillers having higher dielectric constant will enhance the CTI performance due to better insulating behavior in comparison with fillers having lower dielectric constant. The results are unexpected as the comparative examples shows that filler having higher dielectric constant such as barium titanate doesn't show the expected improvement in the CTI performance

Examples 30-35 show that none of the compositions containing aluminum oxide (acidic), bentonite, halloysite clay, magnesium oxide, calcium hydroxyapatite, or calcium carbonate have a combination of a tensile strength greater than or equal to 70 MPa, tensile modulus of greater than or equal to 10,000 GPa, impact strength greater than or equal to 200 J/m, and a number of drops to tracking at 250 volts greater than or equal to 50 drops.

Set forth below are specific embodiments of polyetherimide compositions, methods of manufacture and articles comprising the same.

In an embodiment, a composition comprises, based on the total weight of the composition, 40 to 80 wt% of a polyetherimide; 10 to 50 wt% of talc; and 1 to 15 wt% of a polymer additive comprising a polyphthalamide, a poly(siloxane-etherimide) copolymer, aliphatic polyamide, or a combination comprising at least one of the foregoing; wherein the composition has a number of drops to tracking at 250 volts of greater than or equal to 50 drops determined according to ASTM D-3638-85.

In another embodiment, a composition comprises, based on the total weight of the composition, 40 to 70 wt% of a polyetherimide; and 30 to 50 wt% of talc; and 1 to 15 wt% of a polymer additive comprising a polyphthalamide, a poly(siloxane-etherimide) copolymer, aliphatic polyamide, or a combination comprising at least one of the foregoing; wherein the composition has: a number of drops to tracking at 250 volts of greater than or equal to 50 drops determined according to ASTM D-3638-85; a tensile strength greater than or equal to 50 MPa determined according to ASTM D638; and a tensile modulus of greater than or equal to 10,000 GPa determined according to ASTM method D638.

For the foregoing embodiments, one or more of the following conditions can apply: (a) the composition has a tensile strength greater than or equal to 65 MPa determined according to ASTM D638 and a tensile modulus greater than equal to 10,000 GPa determined according to ASTM D638; (b) the polyetherimide comprises units of the formula (1) wherein R is the same or different, and is a substituted or unsubstituted divalent organic group, T is -O- or a group of the formula -O-Z-O- wherein the divalent bonds of the -O- or the -O-Z-O- group are in the 3,3', 3,4', 4,3', or the 4,4' positions; and wherein Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded, preferably R is a divalent group of the formula (2) wherein Q¹ is -O-, -S-, -C(O)-, -SO₂-, -SO-, -C_{y}H_{2y}- wherein y is an integer from 1 to 5 or a halogenated derivative thereof, or -(C₆H₁₀)_{z}- wherein z is an integer from 1 to 4, and Z is a divalent group of the formula (3a) wherein Q is -O-, -S-, -C(O)-, -SO₂-, -SO-, or -C_{y}H_{2y}- wherein y is an integer from 1 to 5 or a halogenated derivative thereof, more preferably R is m-phenylene and Q is isopropylidene; (c) the poly(siloxane-etherimide) copolymer comprises etherimide units of the formula (1), wherein R is the same or different, and is a substituted or unsubstituted divalent organic group, T is -O- or a group of the formula -O-Z-O- wherein the divalent bonds of the -O- or the -O-Z-O- group are in the 3,3', 3,4', 4,3', or the 4,4' positions; and wherein Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded; preferably R is m-phenylene and Q is isopropylidene; and siloxane units derived from a polysiloxane diamine of the formula (8) wherein R' is each independently a C₁-C₁₃ hydrocarbon group, R⁴ is each independently a C₂-C₂₀ hydrocarbon group, and E has an average value of 5 to 100, preferably R' is methyl, R⁴ is 1,3-propylene, and E is 5 to 100; and in the etherimide units, R is phenylene and Z is a residue of bisphenol A; (e) polyphthalamide comprises units of the formula (10), wherein each G¹ is independently a branched or unbranched C₄₋₈ alkyl group, preferably each G¹ is a 1,6-hexyl group; (f) the aliphatic polyamide comprises units of the formula (11), wherein each G² and G³ are independently a branched or unbranched C₄₋₁₂ alkyl group; (f) talc has a D95 of 2 to 6 micrometers; (g) the composition further comprises an additive selected from a processing aid, a heat stabilizer, an ultraviolet light absorber, a colorant, a flame retardant, or a combination comprising at least one of the foregoing; or (h) the composition comprises, based on the total weight of the composition, from 0.0001 to 20 wt% of each additive present in the composition.

In an embodiment, an insulating material comprises the composition of any one or more of the above embodiments.

In another embodiment, disclosed is an article selected from a molded article, a thermoformed article, an extruded film, an extruded sheet, one or more layers of a multi-layer article, a substrate for a coated article, and a substrate for a metallized article made from the composition of any one or more of the foregoing embodiments.

A method of manufacture of an article, comprises molding, extruding, or casting the composition of any one or more of the above embodiments.

A method of controlling the tracking of an electrical current of an article of manufacture comprises providing a composition of any one or more of the above embodiments and processing the composition to form an article of manufacture.

In the foregoing articles or methods, the article can be a solar apparatus, an electrical junction box, an electrical connector, an electrical vehicle charger, an outdoor electrical enclosure, a smart meter enclosure, a smart grid power node, a photovoltaic frame and a miniature circuit breaker.

The singular forms "a", "an", and "the" include plural referents unless the context clearly dictates otherwise. "Or" means "and/or". The endpoints of all ranges directed to the same component or property are inclusive and independently combinable. Unless defined otherwise, technical and scientific terms used herein have the same meaning as is commonly understood by one of skill in the art to which this invention belongs.

As used herein, a "combination" is inclusive of blends, mixtures, alloys, reaction products, and the like. Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" includes branched or straight chain, unsaturated aliphatic C₁₋₃₀ hydrocarbon groups e.g., methyl, ethyl, n-propyl, i-propyl, n-butyl, s-butyl, t-butyl, n-pentyl, s-pentyl, n- and s-hexyl, n-and s-heptyl, and, n- and s-octyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x represents the number of hydrogens replaced by cyclization(s). The term "aryl" means an aromatic hydrocarbon group containing the specified number of carbon atoms, such as to phenyl, tropone, indanyl, or naphthyl. The prefix "hetero" means that the compound or group includes at least one ring member that is a heteroatom (e.g., 1, 2, or 3 heteroatom(s)), wherein the heteroatom(s) is each independently N, O, S, or P.

"Substituted" means that the compound or group is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g, benzyl), C₇₋₁₂ alkylarylene (e.g, toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the group, including those of the substituent(s).

## Claims

1. A composition comprising, based on the total weight of the composition,
40 to 80 wt% of a polyetherimide;
10 to 50 wt% of talc; and
1 to 15 wt% of a polymer additive comprising a polyphthalamide, a poly(siloxane-etherimide) copolymer, an aliphatic polyamide, or a combination comprising at least one of the foregoing;
wherein the composition has a number of drops to tracking at 250 volts of greater than or equal to 50 drops determined according to ASTM D-3638-85.

2. The composition of claim 1, wherein the polyetherimide comprises units of the formula 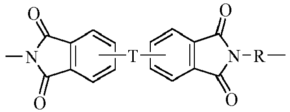 wherein
R is the same or different, and is a substituted or unsubstituted divalent organic group,
T is -O- or a group of the formula -O-Z-O- wherein the divalent bonds of the -O- or the - O-Z-O- group are in the 3,3', 3,4', 4,3', or the 4,4' positions; and wherein Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded.

3. The composition of claim 2, wherein R is a divalent group of the formula 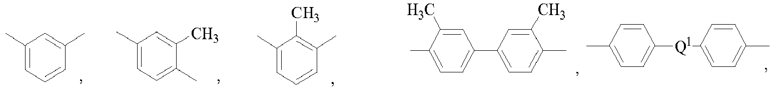 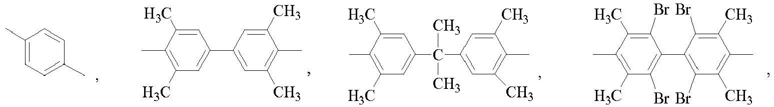 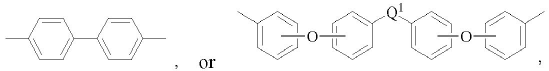 or a combination comprising at least one of the foregoing, wherein Q¹ is -O-, -S-, -C(O)-, -SO₂-, -SO-, -C_{y}H_{2y}- wherein y is an integer from 1 to 5 or a halogenated derivative thereof, or - (C₆H₁₀)_{z}- wherein z is an integer from 1 to 4, and Z is a divalent group of the formula 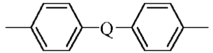 wherein Q is -O-, -S-, -C(O)-, -SO₂-, -SO-, or -C_{y}H_{2y}- wherein y is an integer from 1 to 5 or a halogenated derivative thereof.

4. The composition of claim 2, wherein R is m-phenylene and Q is isopropylidene.

5. The composition of any one or more of claims 1 to 4, wherein the poly(siloxane-etherimide) copolymer comprises etherimide units of the formula 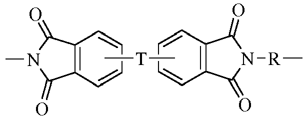 wherein
R is the same or different, and is a substituted or unsubstituted divalent organic group,
T is -O- or a group of the formula -O-Z-O- wherein the divalent bonds of the -O- or the - O-Z-O- group are in the 3,3', 3,4', 4,3', or the 4,4' positions; and wherein Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded; and
siloxane units derived from a polysiloxane diamine of the formula 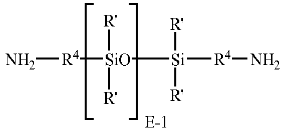 wherein
R' is each independently a C₁-C₁₃ hydrocarbon group,
R⁴ is each independently a C₂-C₂₀ hydrocarbon group, and
E has an average value of 5 to 100.

6. The composition of claim 5, wherein in the polysiloxane diamine, R' is methyl, R⁴ is 1,3-propylene, and E is 5 to 100; and wherein in the etherimide units, R is phenylene and Z is a residue of bisphenol A.

7. The composition of any one or more of claims 1 to 6, wherein polyphthalamide comprises units of the formula 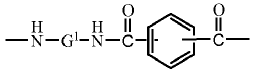 wherein each G¹ is independently a branched or unbranched C₄₋₈ alkyl group. optionally wherein each G¹ is a 1,6-hexyl group.

8. The composition of any one or more of claims 1 to 7, wherein the aliphatic polyamide comprises units of the formula 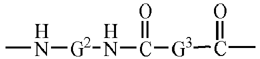 wherein each G² and G³ is independently a branched or unbranched C₄₋₁₂ alkyl group.

9. The composition of any one or more of claims 1 to 8, further comprising a processing aid, a heat stabilizer, an ultraviolet light absorber, a colorant, a flame retardant, or a combination comprising at least one of the foregoing.

10. An insulating material comprising the composition of any one or more of claims 1 to 9.

11. An article selected from a molded article, a thermoformed article, an extruded film, an extruded sheet, a layer of a multi-layer article, a substrate for a coated article, and a substrate for a metallized article made from the composition of any one or more of claims 1 to 9.

12. An article made from the composition of any one or more of claims 1 to 9, wherein the article is a solar apparatus, an electrical junction box, an electrical connector, an electrical vehicle charger, an outdoor electrical enclosure, a smart meter enclosure, a smart grid power node, a photovoltaic frame and a miniature circuit breaker.

13. A method of manufacture of an article, comprising molding, extruding, or casting the composition of any one or more of claims 1 to 9 to form the article.

14. A method of controlling the tracking of an electrical current of an article of manufacture, the method comprising: providing a composition of any one or more of claims 1 to 9, and processing the composition to form an article of manufacture.

15. The method of claim 14, wherein the article is a solar apparatus, an electrical junction box, an electrical connector, an electrical vehicle charger, an outdoor electrical enclosure, a smart meter enclosure, a smart grid power node, a photovoltaic frame and a miniature circuit breaker.

## Patentansprüche

1. Zusammensetzung umfassend bezogen auf das Gesamtgewicht der Zusammensetzung
40 bis 80 Gew.-% eines Polyetherimids;
10 bis 50 Gew.-% Talk; und
1 bis 15 Gew.-% eines Polymerzusatzstoffs, der ein Polyphthalamid, ein Poly(siloxan-Etherimid)-Copolymer, ein aliphatisches Polyamid oder eine mindestens eines der Vorangehenden umfassende Kombination umfasst;
wobei die Zusammensetzung eine Tropfenanzahl bis zur Kriechwegbildung bei 250 Volt von über oder gleich 50 Tropfen bei Bestimmung nach ASTM D-3638-85 aufweist.

2. Zusammensetzung nach Anspruch 1, wobei das Polyetherimid Einheiten der Formel 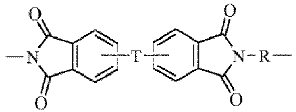 umfasst, wobei
R gleich oder verschieden ist und für eine substituierte oder unsubstituierte zweiwertige organische Gruppe steht,
T für -O- oder eine Gruppe der Formel -O-Z-O- steht, wobei die zweiwertigen Bindungen des -O- oder der -O-Z-O-Gruppe sich an den Positionen 3,3', 3,4', 4,3' oder 4,4' befinden; und wobei Z für einen aromatischen monocyclischen oder polycyclischen C₆₋₂₄-Rest steht, der gegebenenfalls mit 1 bis 6 C₁₋₈-Alkylgruppen, 1 bis 8 Halogenatomen oder einer Kombination davon substituiert ist, vorausgesetzt, dass die Valenz von Z nicht überschritten wird.

3. Zusammensetzung nach Anspruch 2, wobei R eine zweiwertige Gruppe der Formel 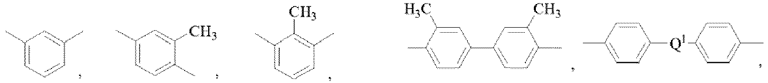 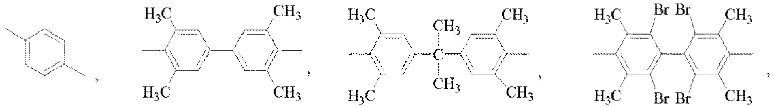 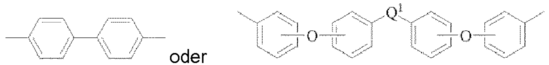 oder eine mindestens eines der Vorangehenden umfassende Kombination ist, wobei Q¹ für -O-, -S-, -C(O)-, -SO₂-, -SO-, -C_{y}H_{2y}-, wobei Y eine ganze Zahl von 1 bis 5 bedeutet, oder ein halogeniertes Derivat davon oder -(C₆H₁₀)_{z}-, wobei z eine ganze Zahl von 1 bis 4 bedeutet, steht und Z eine zweiwertige Gruppe der Formel 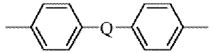 ist, wobei Q für -O-, -S-, -C(O)-, -SO₂-, -SO- oder -C_{y}H_{2y}-, wobei Y eine ganze Zahl von 1 bis 5 bedeutet, oder ein halogeniertes Derivat davon steht.

4. Zusammensetzung nach Anspruch 2, wobei R für m-Phenylen steht und Q für Isopropyliden steht.

5. Zusammensetzung nach irgendeinem oder mehreren der Ansprüche 1 bis 4, wobei das Poly(siloxan-Etherimid)-Copolymer Folgendes umfasst:
Etherimid-Einheiten der Formel 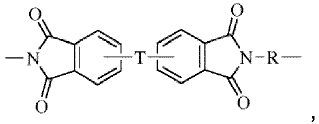 wobei
R gleich oder verschieden ist und für eine substituierte oder unsubstituierte zweiwertige organische Gruppe steht,
T für -O- oder eine Gruppe der Formel -O-Z-O- steht, wobei die zweiwertigen Bindungen des -O- oder der -O-Z-O-Gruppe sich an den Positionen 3,3', 3,4', 4,3' oder 4,4' befinden; und wobei Z für einen aromatischen monocyclischen oder polycyclischen C₆₋₂₄-Rest steht, der gegebenenfalls mit 1 bis 6 C₁₋₈-Alkylgruppen, 1 bis 8 Halogenatomen oder einer Kombination davon substituiert ist, vorausgesetzt, dass die Valenz von Z nicht überschritten wird; und
Siloxan-Einheiten, die von einem Polysiloxandiamin der Formel 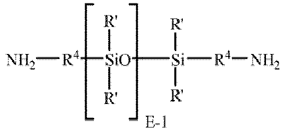 abgeleitet sind, wobei
R' jeweils unabhängig für eine C₁-C₁₃-Kohlenwasserstoffgruppe steht,
R⁴ jeweils unabhängig für eine C₂-C₂₀-Kohlenwasserstoffgruppe steht und
E einen Mittelwert von 5 bis 100 aufweist.

6. Zusammensetzung nach Anspruch 5, wobei in dem Polysiloxandiamin R' für Methyl steht, R⁴ für 1,3-Propylen steht und E 5 bis 100 bedeutet; und wobei in den Etherimid-Einheiten R für Phenylen steht und Z für einen Rest von Bisphenol A steht.

7. Zusammensetzung nach irgendeinem oder mehreren der Ansprüche 1 bis 6, wobei das Polyphthalamid Einheiten der Formel 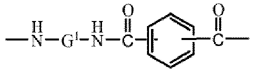 umfasst, wobei jedes G¹ unabhängig für eine verzweigte oder unverzweigte C₄₋₈-Alkylgruppe steht,
wobei gegebenenfalls jedes G¹ für eine 1,6-Hexylgruppe steht.

8. Zusammensetzung nach irgendeinem oder mehreren der Ansprüche 1 bis 7, wobei das aliphatische Polyamid Einheiten der Formel 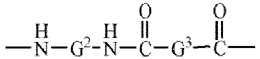 umfasst, wobei jedes G² und G³ unabhängig für eine verzweigte oder unverzweigte C₄₋₁₂-Alkylgruppe stehen.

9. Zusammensetzung nach irgendeinem oder mehreren der Ansprüche 1 bis 8, ferner umfassend ein Verarbeitungshilfsmittel, einen Wärmestabilisator, einen Ultraviolettlicht-Absorber, einen Farbstoff, einen Flammhemmer oder eine mindestens eines der Vorangehenden umfassende Kombination.

10. Isolationsmaterial umfassend die Zusammensetzung nach irgendeinem oder mehreren der Ansprüche 1 bis 9.

11. Artikel, ausgewählt aus einem Formkörper, einem warmgeformten Artikel, einem extrudierten Film, einer extrudierten Folie, einer Schicht eines mehrschichtigen Artikels, einem Substrat für einen beschichteten Artikel und einem Substrat für einen metallbeschichteten Artikel bestehend aus der Zusammensetzung nach irgendeinem oder mehreren der Ansprüche 1 bis 9.

12. Artikel, bestehend aus der Zusammensetzung nach irgendeinem oder mehreren der Ansprüche 1 bis 9, wobei der Artikel eine Solarvorrichtung, eine elektrische Anschlussdose, ein elektrischer Verbinder, ein elektrisches Fahrzeugladegerät, ein wetterfestes elektrisches Gehäuse, ein Gehäuse eines intelligenten Zählers, ein Leistungsknoten eines intelligenten Stromnetzes, ein Photovoltaikrahmen und ein Miniaturleistungsschalter ist.

13. Verfahren zur Herstellung eines Artikels, umfassend das Umformen, Extrudieren oder Gießen der Zusammensetzung nach irgendeinem oder mehreren der Ansprüche 1 bis 9, um den Artikel zu bilden.

14. Verfahren zur Steuerung der Kriechwegbildung eines elektrischen Stroms eines Herstellungsartikels, wobei das Verfahren Folgendes umfasst: Bereitstellen einer Zusammensetzung nach irgendeinem oder mehreren der Ansprüche 1 bis 9 und Verarbeiten der Zusammensetzung, um einen Herstellungsartikel zu bilden.

15. Verfahren nach Anspruch 14, wobei der Artikel eine Solarvorrichtung, eine elektrische Anschlussdose, ein elektrischer Verbinder, ein elektrisches Fahrzeugladegerät, ein wetterfestes elektrisches Gehäuse, ein Gehäuse eines intelligenten Zählers, ein Leistungsknoten eines intelligenten Stromnetzes, ein Photovoltaikrahmen und ein Miniaturleistungsschalter ist.

## Revendications

1. Composition comprenant, par rapport au poids total de la composition,
40 à 80 % en poids d'un polyétherimide ;
10 à 50 % en poids de talc ; et
1 à 15 % en poids d'un additif polymère comprenant un polyphtalamide, un copolymère de poly(siloxane-étherimide), un polyamide aliphatique ou une combinaison comprenant au moins l'un des éléments qui précèdent ;
dans laquelle la composition présente un nombre de gouttes nécessaires pour un cheminement de courant à 250 volts supérieur ou égal à 50 gouttes, déterminé conformément à la norme ASTM D-3638-85.

2. Composition selon la revendication 1, dans laquelle le polyétherimide comprend des motifs de formule 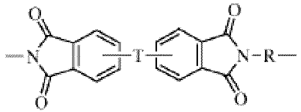 dans laquelle
R est identique ou différent, et est un groupe organique divalent substitué ou non substitué,
T est -O- ou un groupe de formule -O-Z-O- dans lequel les liaisons divalentes du groupe -O- ou du groupe -O-Z-O- sont aux positions 3,3', 3,4', 4,3' ou 4,4' ; et dans lequel Z est une fraction monocyclique ou polycyclique aromatique en C₆₋₂₄ éventuellement substituée par 1 à 6 groupes alkyle en C₁₋₈, 1 à 8 atomes d'halogène, ou une combinaison de ceux-ci, à condition que la valence de Z ne soit pas dépassée.

3. Composition selon la revendication 2, dans laquelle R est un groupe divalent de formule 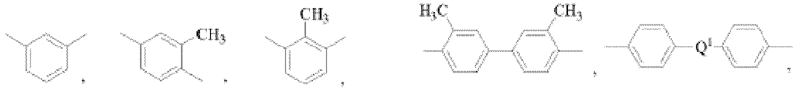 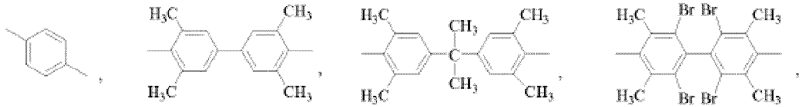 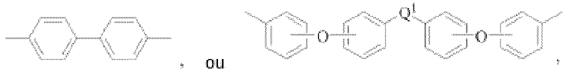 ou une combinaison comprenant au moins l'une des formules précitées, dans lesquelles Q¹ est -O-, -S-, -C(O)-, -SO₂-, -SO-, -C_{y}H_{2y-} dans lequel y est un nombre entier compris entre 1 et 5 ou un dérivé halogéné de celui-ci, ou - (C₆H₁₀)_{z}- dans lequel z est un nombre entier compris entre 1 et 4, et Z est un groupe divalent de formule 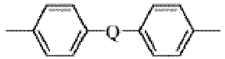 dans laquelle Q est -O-, -S-, -C(O)-, -SO₂-, -SO- ou -C_{y}H_{2y}- dans lequel y est un nombre entier compris entre 1 et 5 ou un dérivé halogéné de celui-ci.

4. Composition selon la revendication 2, dans laquelle R est un m-phénylène et Q est un isopropylidène.

5. Composition selon l'une quelconque ou plusieurs des revendications 1 à 4, dans laquelle le copolymère poly(siloxane-étherimide) comprend des motifs étherimide de formule 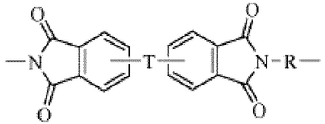 dans laquelle
R est identique ou différent, et est un groupe organique divalent substitué ou non substitué,
T est -O- ou un groupe de formule -O-Z-O- dans lequel les liaisons divalentes du groupe -O- ou du groupe -O-Z-O- sont aux positions 3,3', 3,4', 4,3' ou 4,4' ; et dans lequel Z est une fraction monocyclique ou polycyclique aromatique en C₆₋₂₄ éventuellement substituée par 1 à 6 groupes alkyle en C₁₋₈, 1 à 8 atomes d'halogène, ou une combinaison de ceux-ci, à condition que la valence de Z ne soit pas dépassée ; et
des motifs siloxane dérivés d'une polysiloxane diamine de formule 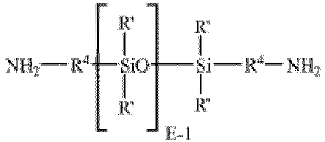 dans laquelle
R' est, chacun indépendamment, un groupe hydrocarboné en C₁-C₁₃,
R⁴ est, chacun indépendamment, un groupe hydrocarboné en C₂-C₂₀, et
E a une valeur moyenne comprise entre 5 et 100.

6. Composition selon la revendication 5, dans laquelle, dans la polysiloxane diamine, R' est un méthyle, R⁴ est un 1,3-propylène, et E est compris entre 5 et 100 ; et dans laquelle, dans les motifs étherimide, R est un phénylène et Z est un résidu de bisphénol A.

7. Composition selon l'une quelconque ou plusieurs des revendications 1 à 6, dans laquelle le polyphtalamide comprend des motifs de formule 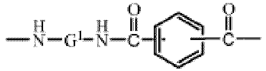 dans laquelle chaque G¹ est indépendamment un groupe alkyle en C₄₋₈ ramifié ou non ramifié,
dans laquelle, éventuellement, chaque G¹ est un groupe 1,6-hexyle.

8. Composition selon l'une quelconque ou plusieurs des revendications 1 à 7, dans laquelle le polyamide aliphatique comprend des motifs de formule 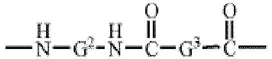 dans laquelle chaque G² et G³ est indépendamment un groupe alkyle en C₄₋₁₂ ramifié ou non ramifié.

9. Composition selon l'une quelconque ou plusieurs des revendications 1 à 8, comprenant en outre un adjuvant de traitement, un stabilisant thermique, un absorbeur de lumière ultraviolette, un colorant, un retardateur de flamme ou une combinaison comprenant au moins l'un des éléments qui précèdent.

10. Matériau isolant comprenant la composition selon l'une quelconque ou plusieurs des revendications 1 à 9.

11. Article choisi parmi un article moulé, un article thermoformé, un film extrudé, une feuille extrudée, une couche d'un article multicouche, un substrat pour un article revêtu et un substrat pour un article métallisé fabriqué à partir de la composition selon l'une quelconque ou plusieurs des revendications 1 à 9.

12. Article fabriqué à partir de la composition selon l'une quelconque ou plusieurs des revendications 1 à 9, dans lequel l'article est un appareil solaire, une boîte de jonction électrique, un connecteur électrique, un chargeur de véhicule électrique, une armoire électrique extérieure, une armoire de compteur intelligent, un noeud d'alimentation de réseau intelligent, un cadre photovoltaïque et un disjoncteur miniature.

13. Procédé de fabrication d'un article, comprenant le moulage, l'extrusion ou la coulée de la composition selon l'une quelconque ou plusieurs des revendications 1 à 9 pour former l'article.

14. Procédé de contrôle du cheminement d'un courant électrique d'un article manufacturé, le procédé comprenant : la fourniture d'une composition selon l'une quelconque ou plusieurs des revendications 1 à 9, et le traitement de la composition pour former un article manufacturé.

15. Procédé selon la revendication 14, dans lequel l'article est un appareil solaire, une boîte de jonction électrique, un connecteur électrique, un chargeur de véhicule électrique, une armoire électrique extérieure, une armoire de compteur intelligent, un noeud d'alimentation de réseau intelligent, un cadre photovoltaïque et un disjoncteur miniature.
